# EUROPEAN PATENT APPLICATION

(11) **EP 0 748 080 A1**
(43) Date of publication of application: **11.12.1996**
(21) Application number: 96303806.2
(22) Date of filing: 29.05.1996
(51) Int. Cl.: H04L 12/28, G08G 1/127, G01S 5/14, G06F 17/60, B61L 25/02

(54) **Asset tracking data reduction and dissemination service**

(30) Priority: 07.06.1995 US 487741
(71) Applicant: GENERAL ELECTRIC COMPANY, Schenectady, NY 12345 (US)
(72) Inventor: Welles II, Kenneth Brakeley, Scotia, New York 12302 (US); Hershey, John Erik, Ballston Lake, New York 12019 (US)
(74) Representative: Matthews, Graham Farrah

(57) **Abstract**

A data reduction, processing and dissemination system provides selected data collected from tracked assets to customers according to specified requirements. The location of a tracked asset is determined using a GPS receiver and a satellite transceiver in tracking units affixed to the assets being tracked. The tracking units are formed into a local area network of tracking units. Each tracking unit is identified by a unique identification (ID) and includes various sensors which monitor environmental conditions. Within the network, one tracking unit is selected to act as a master and the remaining tracking units function as slaves. The slave tracking units periodically transmit their respective IDs together with sensor data and battery condition to the master tracking unit. The master tracking unit, in turn, maintains a list of IDs of the slave tracking units in the network and collects the data transmitted to it by the slave tracking units. Periodically, the master tracking unit transmits to a central station a frame of data identifying all tracking units in its network together with environmental and battery data collected from the tracking units. All the data are collected and processed at the central station. The data are processed for specific customers and may take the form of textual reports, exception reporting, graphical display, etc. Data are disseminated via various telecommunications carriers, as specified by the customers.

## Description

This invention relates to tracking of assets, and in particular goods, containers and railcars during transit, using the Global Positioning System (GPS) and, more particularly, to the reduction, processing and dissemination of asset tracking data collected at a central station.

Goods shipped from a manufacturing plant, warehouse or port of entry to a destination are normally tracked to assure their timely and safe delivery. Tracking has heretofore been accomplished in part by use of shipping documents and negotiable instruments, some of which travel with the goods and others of which are transmitted by post or courier to a receiving destination. This paper tracking provides a record which is completed only on the safe delivery and acceptance of the goods. However, there sometimes is a need to know the location of the goods while in transit. Knowledge of the location of the goods can be used for inventory control, scheduling and monitoring.

Shippers have provided information on the location of goods by tracking their vehicles, knowing what goods are loaded on those vehicles. Goods are often loaded aboard shipping containers or container trucks, for example, which are in turn loaded aboard railcars. Various devices have been used to track such vehicles. In the case of railcars, passive radio frequency (RF) transponders mounted on the cars have been used to facilitate interrogation of each car as it passes a way station and supply the car's identification (ID). This information is then transmitted by a radiated signal or land line to a central station which tracks the locations of railcars. This technique, however, is deficient in that while a train remains on a siding for an extended period of time, the railcars do not pass a way station, causing what may amount to a considerable delay. Moreover, way station installations are expensive, requiring a compromise that results in way stations being installed at varying distances, depending on the track layout. Thus the precision of location information varies from place to place on the railroad.

Recently, mobile tracking units have been used for tracking various types of vehicles, such as trains. Communication has been provided by means of cellular mobile telephone or RF radio link. Such mobile tracking units are generally installed aboard the locomotive which provides a ready source of power. However, in the case of shipping containers, container truck trailers and railcars, a similar source of power is not readily available. Mobile tracking units which might be attached to containers and vehicles must be power efficient in order to provide reliable and economical operation.

Most current asset tracking systems are land-based systems wherein a radio unit on the asset transmits information to wayside stations of a fixed network, such as the public land mobile radio network or a cellular network. These networks do not have ubiquitous coverage, and the asset tracking units are expensive. A satellite-based truck tracking system developed by Qualcomm Inc., known as OMNITRACS, is in operation in the United States and Canada. This system requires a specialized directional antenna and considerable power for operation, while vehicle location, derived from two satellites, is obtained to an accuracy of about one-fourth kilometer. A rail vehicle positioning system described in U.S. Patent No. 5,129,605 to Burns et al. is installed on the locomotive of a train and uses, as inputs to generate a location report, including a GPS receiver, a wheel tachometer, transponders, and manual inputs from the locomotive engineer.

In an asset tracking system disclosed in U.S. application Serial No. 08/484,750 entitled "Local Communication Network for Power Reduction and Enhanced Reliability in a Multiple Node Tracking System" by Welles et al. and in U.S. application Serial No.08/487, 272 entitled "Protocol and Mechanism for Primary and Mutter Mode Communication for Asset Tracking" by Ali et al. (GE Pockets RD-23,331 and RD-23,380, respectively) assigned to the instant assignee and incorporated herein by reference, a tracking system based on a "mutter" mode local area network is used to generate data which are transmitted to a central station. For tracking large assets, such as railcars, a prodigious amount of raw data concerning asset location, environmental conditions (including cargo and railbed health status) and related data are collected and transmitted to the central station. These data must be reduced, processed and disseminated in a form to be of vital use to customers of the asset tracking system

It is therefore an object of the invention to provide a system for the reduction, processing and dissemination of data collected in a global positioning asset tracking system.

Another object of the invention to provide a method for data reduction and processing of data collected by an asset tracking system that tracks railcars in transit.

According to the invention there is provided a tracking system according to claims 1.

Further, according to the invention there is provided a method of collecting, reducing, processing, and disseminating tracking data to customers in an asset tracking system according to claim 3.

Preferably, locations of railcars of a train are determined using a GPS receiver and a satellite transceiver on board the locomotive and/or tracking units affixed to individual railcars in the train. The tracking units are incorporated into a local area network of railcar tracking units in what is referred to herein as a "mutter" group. Each tracking unit is identified by a unique identification (ID) and includes various sensors which monitor environmental conditions. Within the mutter group, one tracking unit is selected to function as the master unit and the remaining tracking units function as slave units. The slave tracking units periodically transmit their respective IDs together with sensor data and battery condition to the master tracking unit. The master tracking unit, in turn, maintains a list of IDs of the slave tracking units in its mutter group and collects the data transmitted to it by the slave tracking units. Periodically, the master tracking unit transmits to a central station a frame of data identifying all tracking units in its mutter group together with environmental and battery data collected from the tracking units.

All the data collected by the master tracking unit are processed at the central station. The data are processed for specific customers, meaning that the data are tailored to each customer's requirements. This, in turn, implies that each customer must be able to change its service information profile and thereby revise its standing information reporting orders. The customer must also be able to change, on a timely and responsive basis, parameters affecting the final product to be delivered to the customer. In a preferred implementation, the central station operates in an interactive mode with the customers. The processed data may take the form of textual reports, exception reporting, graphical display, etc.

Data are disseminated via various telecommunication carriers, as specified by the customers. The data processing facility at the central station includes various buffers for both incoming and outgoing data in order to handle communication traffic peaks and crisis situations, and employs a general purpose automatic data processing system involving one or more associated databases. The data processing facility also provides for decryption and privacy transmissions from the asset tracking units if they are equipped with privacy mode capabilities. The central station also provides privacy encryption point-to-point service for data reporting to the customer. Customer billing is based on a formula which takes into account maximum response time, volume of data involved, volume of data transmitted, formatting of data, data communication rates, privacy protection processing costs and other factors.

### BRIEF DESCRIPTION OF THE DRAWINGS

The features of the invention believed to be novel are set forth in the appended claims. The invention, however, together with further objects and advantages thereof, may best be understood by reference to the following description taken in conjunction with the accompanying drawing(s) in which:
Figure 1 is a block diagram of an exemplary asset tracking system which employs mobile tracking units and is useful in the present invention;
Figure 2 is a block diagram showing in further detail a mobile tracking unit as used in the asset tracking system shown in Figure 1;
Figure 3 is a block diagram illustrating organization of the mobile local area network implemented by the present invention;
Figure 4 is a block diagram of the central station used in the system of Figure 1 showing a data processing facility and multiport telecommunications facility for communicating with various customers; and
Figure 5 is a flow diagram showing the steps in performing data reduction, processing and dissemination at the central station.

### DETAILED DESCRIPTION OF A PREFERRED EMBODIMENT OF THE INVENTION

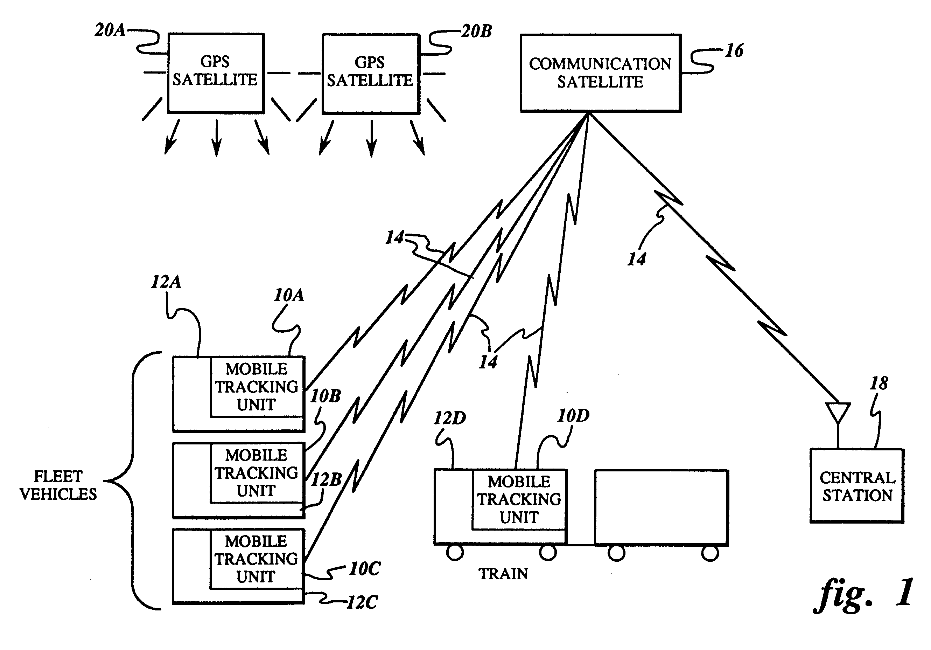

Figure 1 illustrates mobile tracking units which employ navigation signals from a GPS satellite constellation, although other navigation systems can be used in lieu of the GPS system. A set of mobile tracking units 10A-10D are installed in respective railcars 12A-12D, which are to be tracked or monitored. A communication link 14, such as a satellite communication link through a communication satellite 16, is provided between the tracking units and a central station 18 manned by one or more operators and having suitable display devices and the like for displaying location and status information for each railcar equipped with a respective mobile tracking unit. Communication link 14 can be conveniently used for transmitting vehicle conditions or events measured with suitable sensing elements. Communication lid 14 may be one-way (from the tracking units to the central station) or two-way. In a two-way communication link, messages and commands can be sent to the tracking units, thereby further enhancing reliability of the communication.

Communication satellite 16 may be a geostationary (i.e., geosynchronous earth orbit (GEO)) satellite or a plurality of low earth orbit (LEO) satellites, or a combination of both. Each type of satellite has its own benefits and drawbacks. For example, a GEO satellite is more or less stationary with respect to the earth and thus a tracking unit that is blocked from its view by, say, a large building will remain so until the tracking unit moves sufficiently to have its view unblocked. A GEO satellite has a very wide view of the earth and can also remain virtually continuously in touch with its ground stations, providing essentially uninterrupted reporting of the data that it receives from the tracking units. A LEO satellite, on the other hand, having a limited view of the earth at any one time, may not be able to report its received data at once and, therefore, may operate in a "store and forward" mode. The LEO satellite may thus provide an advantage over the GEO satellite in that it is likely to be able to view a tracking unit from a wide variety of angles and overcome obstructions that might affect the GEO scenario. Additionally, a LEO satellite is less expensive than a GEO satellite. As explained in more detall hereinafter, the computer facility at central station 18 may need to include orbital mechanics of the individual satellites with the tracker data.

A constellation of GPS satellites, such as GPS satellites 20A and 20B, provides highly accurate navigation signals which can be used to determine railcar location and velocity when acquired by a suitable GPS receiver. Briefly, the GPS was developed by the U.S. Department of Defense and gradually placed into service throughout the 1980s. The GPS satellites constantly transmit radio signals in L-Band frequency using spread spectrum techniques. The transmitted radio signals carry pseudorandom sequences which allow users to determine location on the surface of the earth (within approximately 100 feet), velocity (within about 0.1 MPH), and precise time information. GPS is a particularly attractive navigation system to employ, being that the respective orbits of the GPS satellites are chosen so as to provide world-wide coverage and being that such highly-accurate radio signals are provided free of charge to users by the U.S. government.

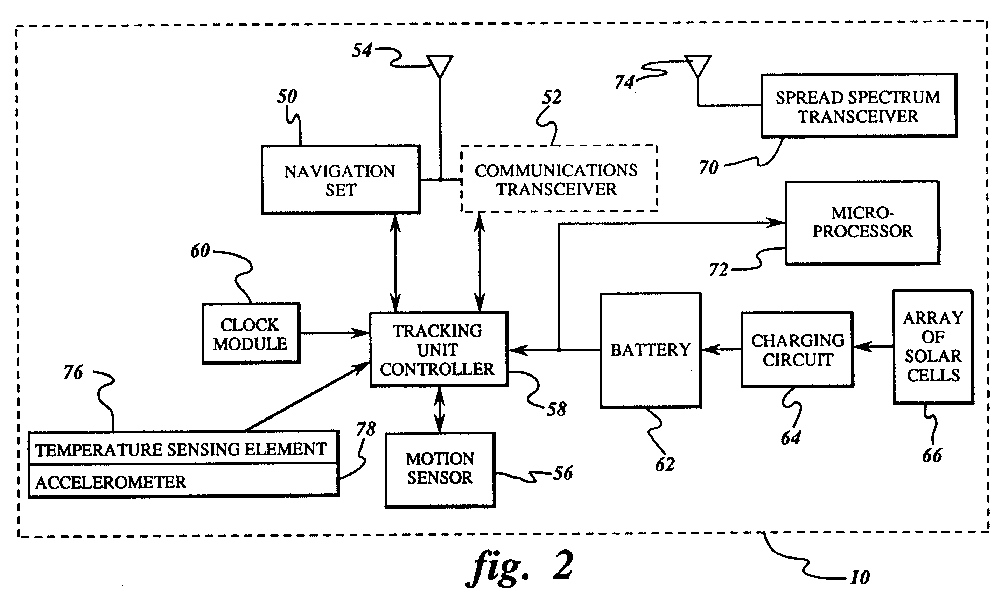

Figure 2 is a block diagram of mobile tracking unit 10 which includes a navigation set 50 capable of generating data substantially corresponding to the vehicle location. Choice of navigation set depends on the particular navigation system used for supplying navigation signals to any given mobile tracking unit. Preferably, the navigation set is a GPS receiver such as a multichannel receiver; however, other receivers designed for acquiring signals from a corresponding navigation system may alternatively be employed. For example, depending on the vehicle location accuracy requirements, the navigation set may comprise a Loran-C receiver or other such less highly-accurate navigation receiver than a GPS receiver. Further, the navigation set may conveniently comprise a transceiver that inherently provides two-way communication with the central station and avoids any need for separately operating an additional component to implement such two-way communication. Briefly, such transceiver would allow for implementation of satellite range measurement techniques, being that the location of the railcar is determined at the central station simply through use of range measurements to the railcar and the central station from two satellites whose position in space is known. The need for power by such navigation set imposes a severe constraint for reliable and economical operation of the mobile tracking unit aboard railcars which typically do not carry power supplies. Typical GPS receivers currently available generally require as much as two watts of electrical power for operation. For the GPS receiver to provide a location fix, it must be energized for some minimum period of time in order to acquire sufficient signal information from a given set of GPS satellites so as to generate a navigation solution. A key advantage of the abovedescribed asset tracking system is the ability to substantially reduce the energy consumed by the mobile tracking unit by selectively reducing the activation or usage rate for the navigation set and other components of the mobile tracking unit. In particular, if, while the railcar is stationary, the activation rate for the navigation set is reduced, then the energy consumed by the mobile tracking unit can be substantially reduced, for example, by a factor of at least one hundred.

Mobile tracking unit 10 includes a suitable communications transceiver 52 functionally independent from navigation set 50. (Transceiver 52 is shown in dashed lines to indicate that such functionally independent component is optional, depending on the particular design implementation for the tracking unit. If the navigation set comprises a transceiver, then transceiver 52 is redundant.) Both communications transceiver 52 and navigation set 50 are actuated by a controller 58, which receives clock signals from a clock module 60 and, in turn, is actuated by a motion sensor 56 only while the asset is in motion. Transceiver 52 is capable of transmitting the vehicle location data by way of communication link 14 (Figure 1) to the central station. If a GPS receiver is used, the GPS receiver and the transceiver can be conveniently combined as a single integrated unit for maximizing efficiency of installation and operation. An example of one such integrated unit is the Galaxy InmarsatC/GPS integrated unit available from Trimble Navigation, Sunnyvale, California, and is conveniently designed for data communication and location reporting between the central station and the mobile tracking unit. A single, low profile antenna 54 can be used for both GPS signal acquisition and satellite communication.

A low power, short distance radio link permits joining the nearby tracking units in a network to minimize power usage and maintain high reliability and functionality of the tracking system. In addition to a power source 62 (which comprises a battery pack that can be charged by an array of solar cells 66 through a charging circuit 64), a GPS receiver 50 and a communications transceiver 52, each tracking unit includes a low power local transceiver 70, a microprocessor 72 and a plurality of sensors 76 and 78. The sensor complement is preferably standardized to achieve economies of production of the tracking units, but to the extent that the tracking units are to be used on certain classes of railcars, the sensors may be specific to a class of railcars. For example, refrigerated railcars may receive tracking units which include a temperature sensor 76 to detect failures in the refrigeration units. In addition, the sensor complement may include accelerometers 78 to detect vibration, providing an indication of railbed and/or railcar truck condition, and to detect shocks due, for example, to collisions, indicating the possibility of damage to the railcar and its contents. Further information on gathering data from cargo sensors may be had by reference to Welles et al. U.S. application Serial No. 08/ , , "Use of Mutter Mode in Asset Tracking for Gathering Data from Cargo Sensors" (GE Docket RD-23,804) assigned to a the instant assignee and incorporated herein by reference.

Microprocessor 72 is interfaced to all of the other elements of the tracking unit and has control over them. The data from sensors 76 and 78 are formatted by the microprocessor for transmission. Transceiver 70 may be a commercially available spread spectrum transceiver such as those currently utilized in wireless local area networks. The signals are broadcast over antenna 74.

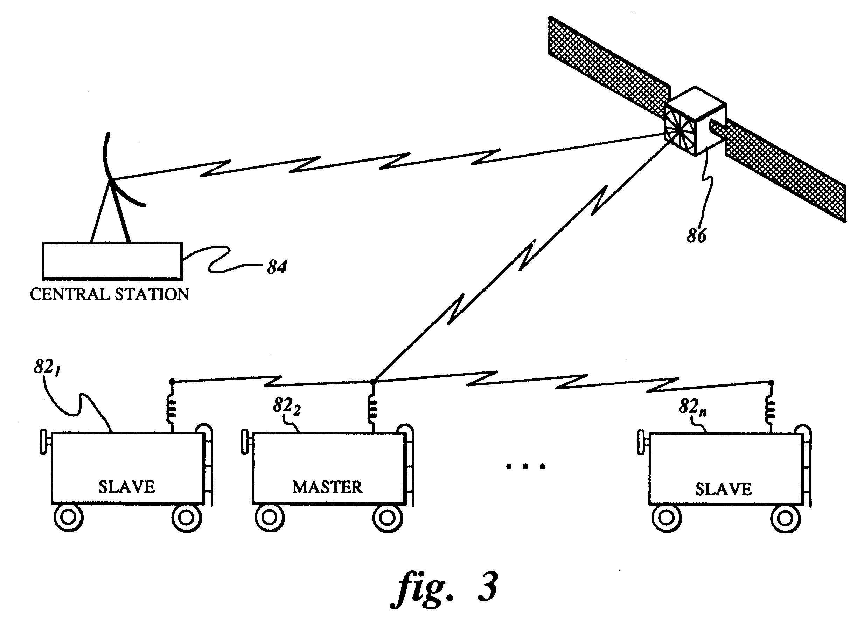

Utilizing local transceiver 70, microprocessor 72 communicates with all other tracking units within communications range. When a train has multiple freight cars equipped with these tracking units, as shown in Figure 3, all of these units will exchange information. A two way communication link between the satellite and the asset tracking units is first established. This depends upon the access method which, in the preferred embodiment, is chosen to be a Time Division, Multiple Access (TDMA) protocol. The TDMA protocol requires each tracking unit to transmit in an assigned time-slot during which no other tracking unit transmits. A TDMA system requires tracking units to be time synchronized to prevent message collisions. This can be accomplished by using GPS absolute time as a reference, or it can be initiated by the central station using a broadcast control channel which is time synchronized to the traffic channel. The tracking units can synchronize to the control channel and hence derive synchronization to the traffic channel. The various tracking units are also assigned transmission frequencies and time slots by the central station and can now transmit on the assigned frequency and time slot. The data transmitted comprises the tracking unit ID, its location (as derived from GPS or equivalent) and battery strength. The tracking unit can decode the GPS data and forward, to the central station, location information with its ID and battery strength. Alternatively, the tracking unit can avoid decoding the GPS data and forward instead the raw received data together with the tracking unit ID and battery strength.

The central station receives the data from the different tracking units, decodes the information, and stores the information in a table. This table constitutes a first database for a data processing system at the central station. Each row of the table has a plurality of entries; for example, unit ID, location, sensor data, battery strength, and signal quality. Signal quality can be received signal strength, bit error rate measured over a known sync word, or carrier-to-interference ratio. The table is sorted by location, and all tracking units within a certain proximity are grouped together. These tracking units form a "mutter" group, illustrated in Figure 3 as comprising the tracking units of tracked assets 82₁ to 82_{*n*}. Next, a tracking unit having "best" signal quality is chosen from each mutter group, here shown as tracking unit 82₂, and central station 84 informs that unit of its new role via satellite 86. The "best" tracking unit serves as the master tracking unit and collects data from each of the members of its group which have likewise been informed of their new role by the ground station via the satellite link. The collected data are then transmitted by the master tracking unit via satellite link to the central station. Thus the mutter group serves to conserve power as other units in the group, especially ones with low battery power, transmit briefly only after long intervals.

Very little data must be transferred between a slave tracking unit and a master tracking unit. Hence, this communication link can be designed to be very low in power. Simple message repetition with differentially encoded modulation and differential detection can be used for the mutter mode. Each master tracking unit has a list of slave tracking units for which it is responsible, and sequentially polls the slave units at fixed intervals. The frame structure for tracking unit master-slave and slave-master communication packets is illustrated below.

| Bits | 8 | 24 | 24 | 8 | variable | 16 |
|---|---|---|---|---|---|---|
| | SYNCH | DEST ADDR | SOURCE ADDR | C | DATA | FEC |

Bit stuffing or bit escaping is used to avoid inadvertent flag creation. In the format illustrated above, "SYNCH" is the synchronization preamble to establish carrier synchronization and symbol boundaries, "DEST ADDR" is the destination address, "SOURCE ADDR" is the address of the source unit, "C" is a control field, "DATA" is the main information in the message, and "FEC" is a forward error correction for errors formed over "DEST ADDR" field through "DATA" field. The number above each segment of the frame structure (except "DATA") indicates the number of bits that make up the respective segment.

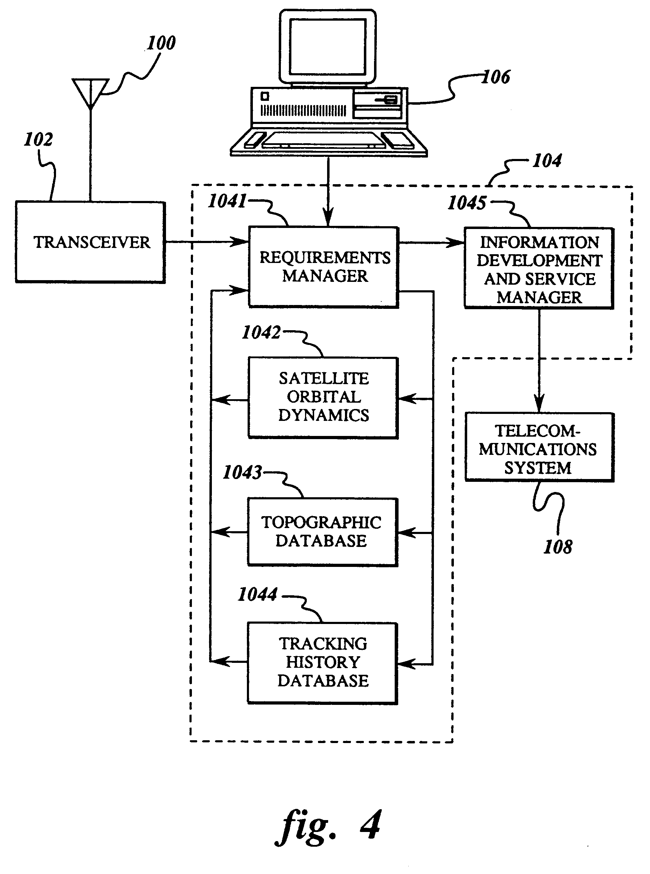

At the central station, as shown in Figure 4, an antenna 100 receives data and transmits commands to the various tracking units via communication link 14 (Figure 1). Antenna 100 is connected to a transceiver 102. The central station is typically manned by personnel who monitor the locations of the tracking units in the system and for this purpose, displays (not shown) are provided. The invention is specifically directed to collection and ultimate dissemination of data to customers whose assets are being tracked and, therefore, no further description of the manned systems at the central station is provided.

Transceiver 102 demodulates received signals to recover the data therefrom and, where encryption is used, decrypts the demodulated data. The raw data are supplied to the data processing facility 104 which sorts the data by ID and maintains the first database mentioned above. This database contains the collected data from each of the tracking units in the system. Data processing facility 104 also maintains a second database which provides customer profiles defining each customer's individual requirements. Each customer has its own service information profile stored in the data processing facility and is able to change this profile and thereby revise its standing information reporting orders. Customers are also able to change, on a timely and responsive basis, parameters affecting delivery of the final product. In a preferred implementation, the service operates in an interactive mode with the customers, represented in Figure 4 by a data input terminal 106 connected to data processing facility 104.

Data processing facility 104 includes various buffers for both incoming and outgoing data in order to handle traffic peaks and crisis situations. The facility includes a general purpose automatic data processing system with one or more associated databases. The system may also provide for decryption and privacy transmissions from asset tracking units which are equipped with, and use, privacy modes. The central station can also provide privacy encryption point-to-point service for data reporting to the customer. Customer billing is based on a formula which takes into account maximum allowed response time, volume of data processed, volume of data transmitted, formatting of data, data communication rates, privacy protection processing costs and other factors.

Data processing facility 104 includes a requirements manager 1041 which accepts customer requirements from terminal 106 and tracking data from transceiver 102 and delivers formatted data to be transmitted to the customers via a telecommunications system 108. Requirements manager 1041 implements the protocols and uses, as internal submodules, a satellite orbital dynamics submodule 1042, topographic database submodule 1043, and a tracking history database submodule 1044.

The satellite orbital dynamics submodule 1042 keeps track of the various satellites' ephemerides and calculates such items as time to satellite viewability from a particular location, extent of overlapped coverage, angle of elevation to satellite from a particular location, etc. The topographic database submodule 1043 retains and updates information on the topography of the earth. It is concerned with such things as large obstructions, predictable shadowing and attenuation, etc., and is used by the protocol to help schedule polling so that radio transmissions will not be scheduled for paths that have a significant chance of being inoperable. The tracking history database submodule 1044 keeps an estimate of the tracking units' locations, their latest communications, summaries of communications reliability, unsuccessful trails, etc.

Output signals from requirements manager 1041 are supplied to an information development and service manager 1045. This manager produces the information and data for the specific salable services. Not all the data reported is required by every customer. Specific salable services oriented to the railcar application include, but are not limited to, the following:
Shippers -- Items of interest include such things as the times that specific railcars departed and arrive This information is important for accurate and timely billing information.
End Users -- Items of interest include knowledge of where the railcars are, their progress, and their conditions. The condition information is especially important in order to learn of potential intransit damages and failures that may be salvageable if an alert is made in a timely fashion, such as refrigerator car malfunctions, etc. Knowledge of railcar positions and progress is necessary to more effectively schedule manufacturing and logistical functions, especially with the growing emphasis on new efficient management philosophies such as "just in time" inventory management.
Rail Companies -- Exception reports are of great interest and utility in arbitrating disputes between shippers and end users concerning potential damage mechanisms.
Railcar Owners - Location information and car wheel health assessment is of significant value to railcar owners to allow scheduling of maintenance in the most cost-effective predictive mode, thereby increasing efficiency and productivity.
Railbed Owners -- Railbed assessment information gleaned from the signal processing of accelerometer data is critical in order to learn of track maintenance needs and to prioritize maintenance activities.

Information development and service manager 1045 generates data specific to each customer. This involves a data reduction process in which data the customer does not want are eliminated; that is, only data which the customer has specifically requested are retained. Data are not actually destroyed in this process; rather, data are selected for later transmission to the customer. Once the data have been selected for the customer, further processing of the data places the data in a form usable by the customer. This is primarily a matter of formatting the data to conform with the customer's specific requirements. The formatted data obtained from information development and service manager 1045 are supplied to telecommunications system 108 with the necessary control codes to select the telecommunications carrier specified by the customer and direct the formatted data to the customer. Telecommunications system 108 has a number of data ports which connect to a variety of carriers which may use land line, cellular telephone or satellite transmission.

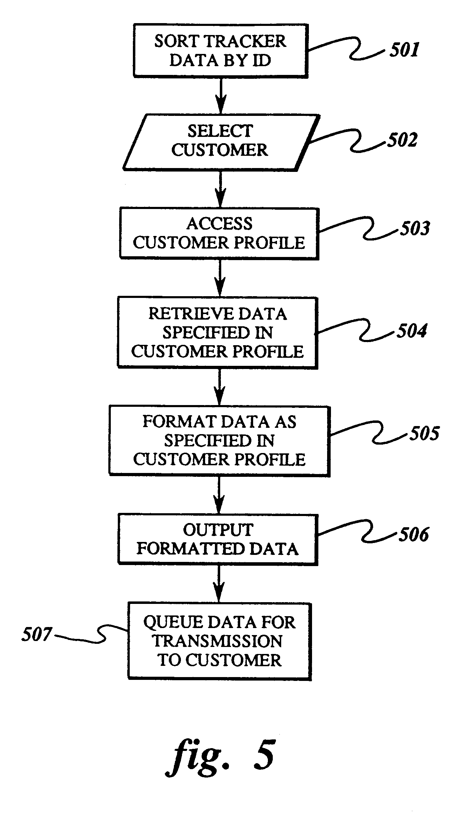

Figure 5 is a flow diagram exemplifying the process, at the central station, of reducing, processing and disseminating data to respective customers. Data are received from the tracking units via transceiver 102 (Figure 4) demodulated, and decrypted if necessary to provide recovered data to data processing facility 104 (Figure 4). The process begins at step 501 by sorting the data by ID. The raw data include data reported by the each of the tracking units and data generated at the central station, including data generated by submodules 1042, 1043 and 1044. (Figure 4). Some of the data may be required by more than one customer, but the database does not store the data by customer. Rather, requirements manager 1041 (Figure 4) maintains a customer database which specifies the data required by each of the customers, the format of the data, the report frequency, and the telecommunications carrier, among other requirements. The requirements manager makes a determination at step 502 of the customer for which customer data is to be prepared. Depending on the customer, a customer profile defining the data required is extracted from the customer database at step 503. This customer profile also defines how the data are to be formatted. The first step in processing the data for the customer is data reduction, which is done at step 504 by retrieving only that data by ID that the selected customer requires. The retrieved data are then formatted at step 505 according to the customer profile. The customer profile also includes the telecommunications carrier specified by the customer. The formatted data are then provided to telecommunications system 108 (Figure 4) at step 506. The data are queued for transmission to the customer via the specified telecommunications carrier at step 507. The queued data are tagged to point to information as to when the data are to be transmitted to the customer. This may be on a periodic basis, an exception basis, or some other basis specified by the customer. If data transmission is on a periodic basis, the transceiver accesses the queued data for transmission at the specified time. If data transmission is on an exception basis, the transceiver accesses the queued data on the next highest priority basis and transmits the data as soon as that priority is reached.

## Claims

1. A tracking system for assets subject to movement, said system including a central station and comprising:
a plurality of tracking units, each of said tracking units being affixed to a respective asset to be tracked and adapted to communicate identification (ID), location and condition data to said central station;
a data processing facility at said central station for receiving ID, location and condition data from each of said tracking units, and for maintaining a first database of said ID, location and condition data;
requirements input means for receiving from each of a plurality of customers tracking data, report format and timing, and telecommunication service for reporting data specified by each of the customers, said data processing facility being adapted to maintain a second database defining a customer profile with the requirements data specific for each of the customers and to use said second database to select data from said first database and to format the selected data for transmission to the customers; and
a telecommunications system for receiving formatted data from said data processing facility and responsive to said data processing facility for transmitting formatted data to each of said customers.

2. The asset tracking system of claim 1 and further comprising a satellite communication link for relaying communications between said tracking units and the data processing facility at said central station, said data processing facility being adapted to calculate satellite orbital dynamics data which are correlated to data in said first database.

3. A method of collecting, reducing, processing, and disseminating asset tracking data to customers in an asset tracking system, comprising the steps of:
affixing a tracking unit to a respect one of assets to be tracked, each of said tracking units being adapted to sense location and environmental conditions and to transmit data including tracking unit identification (ID), location and environmental conditions to a central station;
receiving, at the central station, the ID, location and environment conditions data transmitted by the tracking units of the asset tracking system;
maintaining in a data processing facility a first database of received data from the tracking units;
receiving from each of a plurality of customers, tracking data, report format and timing, and telecommunication service for reporting data specified by said each of a plurality of the customers;
maintaining in said data processing facility a second database defining a customer profile with the requirements for each of the customers;
using said second database to select data from said first database and to format the selected data for transmission to the customers by the data processing facility; and
receiving formatted data from said data processing facility and transmitting said formatted data to each of said customers according to a prescribed time or condition.

4. The method of collecting, reducing, processing, and disseminating asset tracking data to customers in an asset tracking system as recited in claim 3 and further comprising the steps of:
relaying communications between each of said tracking units and the data processing facility at said central station through a satellite communication link; and
calculating at said data processing facility, satellite orbital dynamics data which are correlated to data stored in said first database.
